# EUROPEAN PATENT SPECIFICATION

(11) **EP 2 184 438 B1**
(45) Date of publication and mention of the grant of the patent: **26.12.2018**
(21) Application number: 09252556.7
(22) Date of filing: 05.11.2009
(51) Int. Cl.: E21B 47/06, E21B 47/10, E21B 47/12, E21B 31/20, G01L 11/02

(54) **EQUIPMENT FOR OPTICAL MEASUREMENT OF DOUBLE TEMPERATURE AND PRESSURE AND OF FLOW RATE**
GERÄT ZUM OPTISCHEN MESSEN VON DOPPELTEMPERATUR UND -DRUCK UND DER DURCHFLUSSRATE
ÉQUIPEMENT POUR LA MESURE OPTIQUE DOUBLE DE LA TEMPÉRATURE ET DE LA PRESSION ET DU DÉBIT

(30) Priority: 05.11.2008 BR 0804823
(43) Date of publication of application: 12.05.2010
(73) Proprietor: Petróleo Brasileiro S.A. Petrobras, Rio de Janeiro, RJ (BR); Surco Tecnologia Industrial Ltda, Macaé, RJ (BR)
(72) Inventor: Vidal, Jose Luiz Arias, Rio de Janeiro RJ, 20520050 (BR); Born, Renata Mercante, Rio de Janeiro RJ, 22071000 (BR); Lorenzo, João Luiz dos Santos, Rio de Janeiro RJ, 21321380 (BR); Quinitanilla, José Baza, Lagomar Macaé RJ, 27.970-430 (BR)
(74) Representative: J A Kemp

(56) References cited:
- WO-A1-2005/045181
- WO-A1-2007/003445
- BR-A- PI0 403 240
- DE-A1- 19 860 409
- US-A- 4 838 594
- US-A1- 2002 063 866
- US-A1- 2004 000 197
- US-A1- 2004 173 010
- US-A1- 2005 274 194
- US-A1- 2006 062 510
- US-B2- 6 782 150

## Description

This invention lies in the field of oil well components, such as mandrels. One embodiment of the invention relates to a device which can co-ordinate in one single assembly the measurement of flow rate and at least one other parameter such as temperature and pressure in, for example, oil wells. In an embodiment, this invention relates to a device which co-ordinates in one single assembly the measurement both of temperature and pressure and of flow rate in oil wells, these measurements being taken in real time by means of optical sensors. The device uses an insertable venturi, with which it is possible to measure the flow rate of the well, with the advantage of allowing its replacement whenever a venturi with features different from the one which is being used is necessary. The invention applies especially to measurements in oil wells.

One problem in the prior art is that a known mandrel that measures pressure and temperature only measures these quantities in the annulus of the oil well. Another problem is in the simultaneous measurement of multiple (in this case three) quantities, as it is necessary to use optical connectors in order for the two mandrels to be connected with each other. With the presence of optical connectors, the optical losses are much greater and the optical signal becomes weak. In addition, the optical connectors are difficult to fit.

The use of optical fibres as sensors / transmitters for the measurement of varied physical and chemical quantities is a technology which is in development. Optical fibres have the qualities of being lightweight, and having good flexibility, a long transmission distance, low material reactivity, good electrical insulation, good electromagnetic immunity, and a long working life. In addition, use of optical fibres, when combined with the use of Bragg gratings, dispenses with the need for electronic circuits and movable mechanical elements at the point of measurement. This makes the use of optical fibre extremely advantageous for measurements in places that are difficult to access. This is a common situation in, for example, the operation of oil production wells.

With a view to taking advantage of these optical fibre features, transducers have been developed for the measurement of temperature and pressure, as described in BR PI 0403240-3. Additionally, transducers have been used for the measurement of flow rate, as described in BR PI 0403786-3, with the use of optical fibre.

WO 2007/003445 A1 discloses a sensor system for gas lift wells, US 2005/274194 A1 discloses a fiber optic differential pressure sensor.

However, there is still a lack of devices, particularly ones suitable for use in oil wells, that are suitable for the application of these transducers to the simultaneous measurement of flow rate and other parameters, particularly pressure and temperature. A prototype has been developed which uses two separate mandrels to apply the optical transducers described in the documents referred to above: one mandrel for measuring just pressure and temperature and another mandrel for measuring flow rate. This configuration has in particular three associated problems. A third problem is that the flow rate mandrel can only be used for fluid injection wells, not for production wells.

Accordingly, it is desirable to provide a mandrel with which it is possible to measure flow rate and another parameter such as pressure and/or temperature in both the tubing and annulus of an oil well of both the production and injection type.

In particular, it is sought to solve the problems found in the prior art through the creation of a new mandrel with a configuration with which it is possible to house in its structure both a pressure and temperature sensor and a flow rate sensor, whereby the measurements could be taken simultaneously in, for example, onshore and offshore oil wells in a compact form.

Additionally, it is desirable to provide a handling tool capable of inserting and removing a measuring device into and from such a mandrel. In particular, a handling tool for inserting insertable venturis into such a mandrel is desired.

According to the present invention, there are provided a mandrel for an oil well and a method of measuring parameters using a mandrel disposed in an oil well, as defined in the independent claims. Optional features are defined in the dependent claims.

More specifically, this invention provides equipment for measuring flow rate and one or more other parameters such as temperature and pressure in, for example, oil wells. An embodiment of the mandrel comprises one single hybrid mandrel to which are fitted a double transducer for measuring pressure and temperature in the tubing and annulus, and a pressure differential transducer for measuring the flow rate.

In this configuration, there are four pressure points: two for measuring internal pressure in the tubing and external pressure in the annulus and two for measuring the internal pressure difference in the tubing (flow rate). Preferably, an insertable venturi tube is fitted, which may be fastened in a removable manner to the mandrel. In this configuration, it is necessary to carry out one single cable-sensor optical correction in order for the two sensors to be connected in series, which makes the system compact, thus optimising fitting, making it much faster and more effective.

An embodiment of the hybrid mandrel of this invention comprises, an upper body, central body, lower body, central and side covers, an insertable venturi, pressure and temperature double transducer and a differential pressure transducer. With this configuration, several mandrels can be intercalated in the production tubing, making it possible to take measurements at various different levels in the well.

The fitting of the new mandrel is less laborious and more effective, because there is no need to use optical connectors. The new mandrel can also be used both for injection wells and for production wells.

Furthermore, an embodiment of the present invention is capable of measuring pressure and temperature both in the annulus and in the tubing of oil wells, as the sensor used is different from the one described in patent PI 0403240-3. The sensor used is known as a pressure and temperature double sensor.

Bearing in mind that it is common for mandrels to be fitted in tubing at depths exceeding 1,000 metres, a special tool known as a handling tool (also known as a venturi insertion tool) is also provided. This tool has the purpose of carrying out the insertion and extraction of insertable venturis that are fastened in a removable manner to the mandrel without the hybrid mandrel needing to be withdrawn from the borehole bottom. This tool works in conjunction with known wire line operations.

According to an embodiment of the invention, there is provided equipment for optical measurement of double temperature and pressure and of flow rate characterised in that it comprises one single hybrid mandrel, housing a pressure and temperature double optical sensor and a differential pressure sensor, which comprises the following components: upper body, central body, lower body, central cover, two side covers, insertable venturi, pressure and temperature double transducer and differential pressure transducer, in which:
the upper body and lower body are each fastened to an end of the central body, forming a single part,
the insertable venturi is fastened, in a removable manner, to the inside of the central body,
the upper surface of the upper body, central body and lower body is flat and the following are fastened to it: one of the side covers, the central cover and the second side cover, and
the pressure and temperature double transducer and the differential pressure transducer are fastened to the upper face of the central body, inserted in a recess in the central cover.

According to an embodiment of the invention, there is provided equipment for optical measurement for optical measurement of double temperature and pressure and of flow rate as described above, characterised in that the central body has, in its upper face, two holes which communicate with the inside of the insertable venturi and with the differential pressure transducer, so that it can read the pressure differential and a third hole which communicates with the inside of the hybrid mandrel and with the pressure and temperature double transducer so that it can read the pressure and temperature in the well tubing.

According to an embodiment of the invention, there is provided equipment for optical measurement for optical measurement of double temperature and pressure and of flow rate as described above, characterised in that the central body also has tapped holes in its upper face for taking the screws of the central cover and screws of the differential pressure transducer and pressure and temperature double transducer.

According to an embodiment of the invention, there is provided equipment for optical measurement for optical measurement of double temperature and pressure and of flow rate as described above, characterised in that the central cover has a hole coinciding with the pressure and temperature double transducer so that it can read pressure and temperature in the ring where the hybrid mandrel is inserted.

According to an embodiment of the invention, there is provided equipment for optical measurement for optical measurement of double temperature and pressure and of flow rate, as described above, characterised in that the principal purpose of the lower body and upper body is to make possible the connection of the hybrid mandrel with the oil production tubing, having for this purpose a male thread on the end of the lower body and a female thread in the end of the lower body.

According to an embodiment of the invention, there is provided equipment for optical measurement for optical measurement of double temperature and pressure and of flow rate, as described above, characterised in that the side covers have slits in their lower faces to allow the optical fibres to pass through the inside of the hybrid mandrel.

According to an embodiment of the invention, there is provided equipment for optical measurement for optical measurement of double temperature and pressure and of flow rate, as described above, characterised in that the central cover has a recess along its lower face, which begins close to one end and ends close to the other end; at each end of the central cover, the recess communicates with the outside by means of holes, each one coinciding with the slit of the two side covers, for the optical fibre to pass through; at the places coinciding with the differential pressure transducer and the pressure and temperature double transducer, the recess widens to allow these to be fitted in, having, inside the recess, two protuberances for winding the optical fibre.

According to an embodiment of the invention, there is provided equipment for optical measurement for optical measurement of double temperature and pressure and of flow rate, as described above, characterised in that the insertable venturi is inserted in and withdrawn from the hybrid mandrel by means of a special tool.

According to an embodiment of the invention, there is provided equipment for optical measurement for optical measurement of double temperature and pressure and of flow rate, as described above, characterised in that two types of insertable venturi are used, one for injection and the other for production, the first one to be used in operations of injecting fluids into wells and the second one to be used in oil extraction operations.

According to an embodiment of the invention, there is provided equipment for optical measurement for optical measurement of double temperature and pressure and of flow rate, as described above, characterised in that both of these types have the same basic construction, externally a cylindrical profile while, internally, they have a reduction of the straight section to produce the venturi effect.

According to an embodiment of the invention, there is provided equipment for optical measurement for optical measurement of double temperature and pressure and of flow rate, as described above, characterised in that the injection insertable venturi has several slits along its outside diameter, the following applying:
a first slit communicates with four holes which start from the smallest diameter section of the venturi and, after the fitting of the insertable venturi in the hybrid mandrel, it is aligned with one of the two holes,
two other slits, close to this first slit, one on each side, are fitted with O-rings to produce a perfect seal against the internal wall of the hybrid mandrel, so as to isolate interference with reading carried out by the differential pressure transducer,
a fourth slit, further to the left which, after the fitting of the insertable venturi into the hybrid mandrel, is aligned with the second of the two holes,
from this fourth slit, four longitudinal slits lead off and run to four transverse slits, which communicate with the inside of the injection insertable venturi in its section of largest diameter and, after the fitting of the injection insertable venturi in the hybrid mandrel, one of these transverse slits is aligned with the hole, making it possible for the pressure and temperature double transducer to measure temperature and pressure in the oil well tubing, the pressure prevailing at this point upstream from the venturi is transmitted, through the transverse slit, from the longitudinal slit and from the fourth slit to the second of the two holes, making it possible for the differential pressure transducer to measure the differential pressure between the largest and smallest sections of the venturi,
o the left of the transverse slits, there is a fifth slit which is also fitted with an O-ring, which, together with the O-ring to the left of the first slit produce a second sealed area to prevent interference with the readings of the two transducers.

According to an embodiment of the invention, there is provided equipment for optical measurement for optical measurement of double temperature and pressure and of flow rate, as described above, characterised in that the production insertable venturi has a configuration the same as the injection insertable venturi but with its profile rotated through 180° and with greater dimensions due to housing a holder with locks to hold it in the hybrid mandrel, preventing the oil which is being extracted from pushing it.

According to an embodiment of the invention, there is provided equipment for optical measurement for optical measurement of double temperature and pressure and of flow rate, as described above, characterised in that a third type of venturi is used, known as pack off, which is a type of blind venturi and the purpose of which is to protect the optical sensors so that they are not damaged when the oil well production tubing is pressurised for the packer to be seated.

According to an embodiment of the invention, there is provided equipment for optical measurement for optical measurement of double temperature and pressure and of flow rate, as described above, characterised in that the structure of the hybrid mandrel, the elements for connecting their various different parts and the elements for sealing between their various different parts are suitable for withstanding high pressures and temperatures.

According to an embodiment of the invention, there is provided equipment for optical measurement for optical measurement of double temperature and pressure and of flow rate, as described above, characterised in that, in the sides of the central body, upper body and lower body, there are external slits where the optical fibre cables are fitted in and, after the placing of the cables in the slits, they are fitted with covers which are fastened to the central body, upper body and lower body respectively, so as to keep the cables suitably held in place.

The present invention will now be described, by way of example only, with reference to the accompanying drawings, in which:
Figure 1 shows a side view of an embodiment of the mandrel of the invention.
Figure 2 shows a top view of an embodiment of the mandrel of the invention.
Figure 3 shows a section, as indicated in Figure 2.
Figure 4 shows an exploded view of an embodiment of the mandrel of the invention.
Figure 5a shows a perspective view of an embodiment of the pack off type of venturi.
Figure 5b shows a side view of the pack off type of venturi.
Figure 5c shows a section, as indicated in Figure 5b.
Figure 6a shows a perspective view of an embodiment of the venturi insertion tool which is not part of the invention.
Figure 6b shows an exploded view of an embodiment of the tool.
Figure 6c shows a side view of an embodiment of the tool fitted.
Figure 6d shows a section, as indicated in Figure 6c.
Figure 7a shows a perspective view of an embodiment of the injection venturi.
Figure 7b shows a side view of an embodiment of the injection venturi.
Figure 7c shows a section, as indicated in Figure 7b.
Figure 8a shows a perspective view of an embodiment of the production venturi.
Figure 8b shows an exploded view of an embodiment of the production venturi.
Figure 8c shows a partially sectioned side view of an embodiment of the production venturi.
Figure 9 shows a perspective of an embodiment of the central cover of the mandrel, with the lower part facing upwards.

Seeking to assist understanding of the invention, a detailed description thereof will be given, with reference to the illustrations that accompany this description.

The present invention provides a mandrel (30) for an oil well. The mandrel (30) preferably comprises an elongate body (2), a first transducer (18) and a second transducer (7). The first transducer (18) is for measuring a flow rate of a fluid flowing through the elongate body (2). The second transducer (7) is for measuring at least one physical parameter of the or a fluid. Using this mandrel (30) disposed in an oil well, it is possible to measure simultaneously the flow rate of the fluid flowing through the mandrel (30) and at least one physical parameter of that or another fluid. In an embodiment, the at least one physical parameter is pressure, temperature, or both.

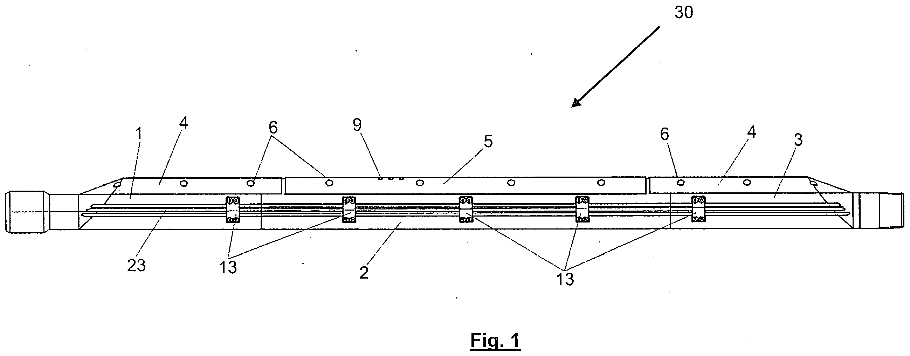

An embodiment of the mandrel (30) of the present invention is depicted in Figures 1 to 4. The mandrel (30) comprises an elongate body (2) a first transducer (18) for measuring a flow rate of a fluid flowing through the elongate body (2) and a second transducer (7) a second transducer (7) for measuring at least one physical parameter of a fluid. Preferably, the second transducer (7) is for measuring pressure and/or temperature.

With this construction, it is possible to measure quantities of flow rate and at least one other physical quantity such as pressure and/or temperature simultaneously. Since the transducers are part of a single mandrel (30), it is not necessary to use connectors to connect the transducers on separate bodies. This means that the measurement signals cannot be adversely affected by any such connectors.

The elongate body (2) is for housing an insertable venturi (12). Preferably, the second transducer (7) is a pressure and temperature double transducer (7). The first transducer (18) is a differential pressure transducer (18). In an embodiment, the mandrel (30) comprises the following components: an upper body (1), the elongate body (2) and a lower body (3).

Given the high pressures that the hybrid mandrel (30) must withstand if placed, for example, in an oil well, in addition to relatively high temperatures, it preferably has a structure and fastening elements suitable for this situation, as will be detailed within this specification.

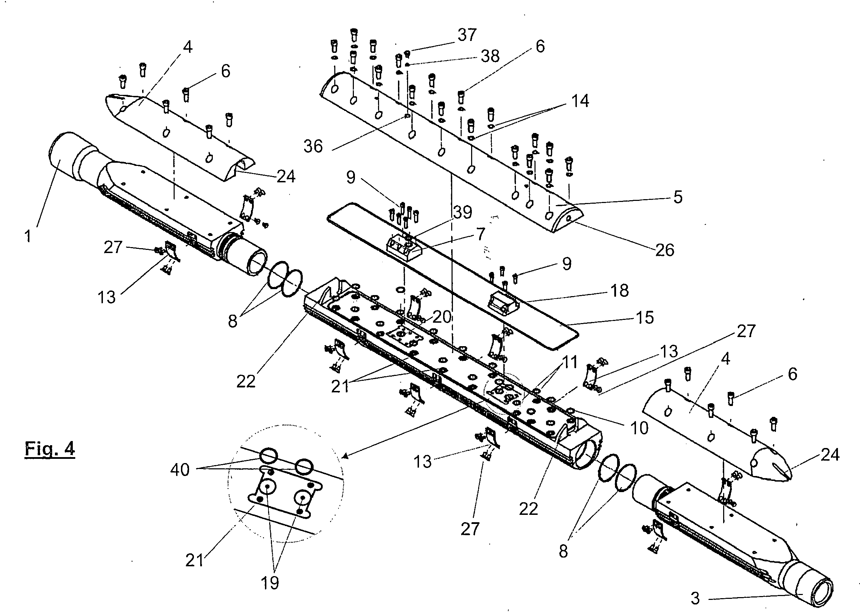

The upper body (1) and lower body (3) are preferably each fastened to an end of the central elongate body (2), forming a single part. Preferably, to ensure sealing, sealing rings (8), preferably of the O-ring type, are used, as shown in greater detail in Figure 4.

The insertable venturi (12) is in communication with the differential pressure transducer (18). This allows the transducer (18) to read the pressure differential of flow within the venturi (12).

The purpose of the lower body (3) and upper body (1) is to make possible the connection of the hybrid mandrel (30) of this invention with oil production tubing. For this purpose, there may be a male thread on the end of the lower body (3) and a female thread on the end of the upper body (1), or vice versa. This allows the elongate body (2) to be fixed into place as part of the tubing of an oil well. This enables convenient measurement of operational parameters of the well.

The upper body (1) and lower body (3) each may have a side cover (4), which may be fastened by means of fastening screws (6). The side covers (4) preferably have slits (24) on their lower faces to allow optical fibre cable to pass to the inside of the hybrid mandrel (30).

Optionally, the mandrel (30) further comprises an optical fibre that connects the first transducer (18) to the second transducer (7). In this case, the measuring involves transmitting light along a path from a point at which the flow rate is measured to a point at which the at least one physical parameter is measured.

Optionally, the first transducer (18) and the second transducer (7) each comprise at least one Bragg grating. Optionally, the at least one Bragg grating of the first transducer (18) and the at least one Bragg grating of the second transducer (7) have different Bragg wavelengths. When Bragg gratings are used, the measuring involves reflecting light of a first wavelength that depends on the flow rate and reflecting light of a second wavelength that depends on the at least one physical parameter. Optionally, the first wavelength is different from the second wavelength.

Optionally, a single optical fibre connects the first transducer (18) to the second transducer (7). In this case, substantially all of the light is transmitted along a single optical fibre.

Optical fibres provide many advantages for use in measurement sensors. Preferably, the transducers of the mandrel (30) use optical fibres for detecting the physical parameters and transmitting the measured information.

A single optical fibre may be shared by the first transducer (18) and the second transducer (7). Fibre Bragg gratings within the optical fibre may be used as sensors. Preferably, at least one fibre Bragg grating in the optical fibre forms part of the first transducer (18) and at least two fibre Bragg gratings in the same optical fibre form part of the second transducer (7) (so that two physical parameters, e.g. pressure and temperature may be measured by the second transducer (7)).

The multiple signals from the multiple sensors can be differentiated using wavelength division multiplexing (WDM). Thus, each Bragg grating operates at a central wavelength within a wave amplitude that is not superimposed to the amplitude of the other Bragg grating sensors. Therefore, optical signals of each Bragg grating sensor serially connected on a single optical fibre can be easily differentiated on the basis of the received wavelength. Time division multiplexing (TDM) techniques can also be used to differentiate among optical signals of different Bragg grating sensors.

In an embodiment, the mandrel (30) comprises a single optical fibre having at least six Bragg gratings. Two of the Bragg gratings are for measuring temperature and pressure of fluid flowing outside the mandrel (30) (e.g. in the oil well annulus). Two of the Bragg gratings are for measuring the temperature and pressure of fluid flowing through the mandrel (30) (e.g. in the oil well tubing). These four Bragg gratings are in connection with the second transducer (7). Two of the Bragg gratings are for measuring the flow rate of the fluid flowing through the mandrel (30). These two Bragg gratings are in connection with the first transducer (18).

The second transducer (7) is arranged to interact with fluid flowing through the elongate body (2) so as to measure at least one physical parameter of the fluid flowing through the elongate body (2). In this way, the second transducer (7) may be used to measure parameters within the elongate body (2). In particular, the mandrel (30) may be positioned in the tubing of an oil well, for example. In this case, it is possible to measure parameters such as pressure and temperature within the tubing of the oil well.

The first and second transducers are attached to the same surface of the elongate body (2). The apparatus further comprises a cover (5) connected to the surface of the elongate body (2) to which the first transducer (18) and the second transducer (7) are attached. In this way, the cover and the surface of the elongate body (2) substantially enclose the first transducer (18) and the second transducer (7) between them. This provides protection for the transducers from their outside environment.

The cover comprises a central cover (5), and side covers (4).

The second transducer (7) is arranged to interact with a fluid flowing outside the elongate body (2) so as to measure at least one physical parameter of the fluid flowing outside the elongate body (2). In particular, the cover comprises a hole (36) for communicating the second transducer (7) to the exterior of the mandrel (30). When the apparatus is positioned in the tubing of an oil well, this hole allows the second transducer (7) to measure the pressure and temperature within the annulus of the oil well. Hence, it is possible to measure working parameters such as pressure and temperature in both the tubing and the annulus of an oil well using the same mandrel (30).

The second transducer (7) is arranged to interact with both the fluid flowing through the elongate body (2) so as to measure the at least one physical parameter of the fluid flowing through the elongate body (2) and a fluid flowing outside the elongate body (2) so as to measure the at least one physical parameter of the fluid flowing outside the elongate body (2).

The method of measuring parameters using the mandrel (30) of the present invention comprises the step of interacting a transducer comprised in the mandrel (30) with both the fluid flowing through the mandrel (30) so as to measure the at least one physical parameter of the fluid flowing through the mandrel (30) and a fluid flowing outside the mandrel (30) so as to measure the at least one physical parameter of the fluid flowing outside the mandrel (30).

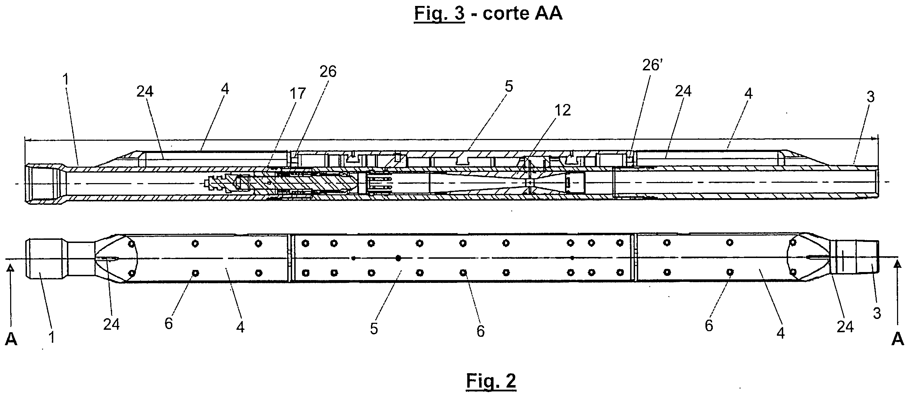

Preferably, on its upper face, the elongate body (2) has two holes (19), shown in detail in Figure 4, which allow communication between the inside of the insertable venturi (12), shown in detail in Figure 3, and the differential pressure transducer (18). The transducers are preferably attached to this upper face. Preferably, the upper face of the central body comprises a third hole (20), which enables communication between the inside of the hybrid mandrel (30) and the pressure and temperature double transducer (7). The elongate body (2) may also have tapped holes (21) in its upper face for taking screws (6) of the central cover (5) and screws (9) of both the differential pressure transducer (18) and the pressure and temperature double transducer (7).

The second transducer (7) and the first transducer (18) may be fastened to the elongate body (2) by means of fastening screws (9).

To ensure a complete seal between the elongate body (2) and central cover (5), a sealing member (15) of substantially rectangular form may be used. With this same objective, O-ring type rings (10 and 11) may be placed on all the screws (6) in the space between the central cover (5) and the elongate body (2).

As an additional sealing reinforcement, the screws (6), which hold the central cover (5), can have seal washers (14). In the same way, it is desirable for sealing rings (40) to be placed at the holes (19 and 20) to ensure a perfect seal between the elongate body (2) and the two transducers (7 and 18).

Preferably, the mandrel (30) further comprises guide portions (22) fixed to the exterior surface of the elongate body (2) configured to guide an optical fibre. In particular, as depicted in Figure 4, fastened to the central body (2) there may be guides (22) for the fitting in of rings (not shown), which guide the passing of optical fibre (not shown) through slits (24) of the side covers (4) to a hole (26) in the central cover (5).

To the sides of the central body (2), upper body (1) and lower body (3), there may be slits (23), in which the optical fibre cables (not shown) may be fitted. This protects the cables from possible damage during handling of the device (see Figure 1). In this case, after the placing of the cables in the slits (23), they may be fitted with covers (13), which are preferably fastened with screws (27) on the central body (2), upper body (1) and lower body (3) respectively, to keep the cables suitably held in place.

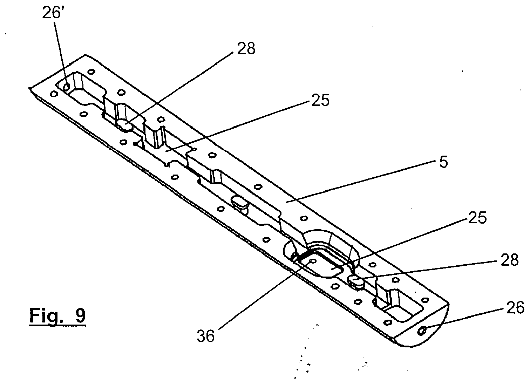

As illustrated in detail in Figure 9, the central cover (5) preferably has a recess (25) along its lower face, which extends from close to one end of the cover to a position close to the other end of the cover. At each end of the central cover, the recess preferably communicates with the outside by means of a hole (26 and 26'). The holes (26 and 26') coincide with the slits (24) of the two side covers (4), for passing the optical fibre through (see Figure 3).

Preferably, at the places coinciding with the differential pressure transducer (18) and pressure and temperature double transducer (7), the recess (25) widens, so that they can be fitted in easily. Inside the recess (25), there are preferably two protuberances (28) for winding the optical fibre round.

The central cover (5) preferably has a hole (36) (see Figure 4) coinciding with the pressure and temperature double transducer (7) so that it can read pressure and temperature in the annulus where the hybrid mandrel (30) is inserted.

A sealing ring (39) may be inserted between the central cover (5) and the double transducer (7) so as to isolate with the readings taken by the pressure and temperature double transducer (7) from interference from the outside of the hybrid mandrel (30). If necessary, the hole (36) can be closed up with, for example, a plug (37) and an O-ring (38).

Optionally, the mandrel (30) further comprises a venturi (12) detachably inserted within the elongate body (2). In this case the measuring method further comprises the step of detachably inserting the venturi (12) within the mandrel (30).

The present invention also provides a venturi (12) that is suitable for insertion in the above-described mandrel (30).

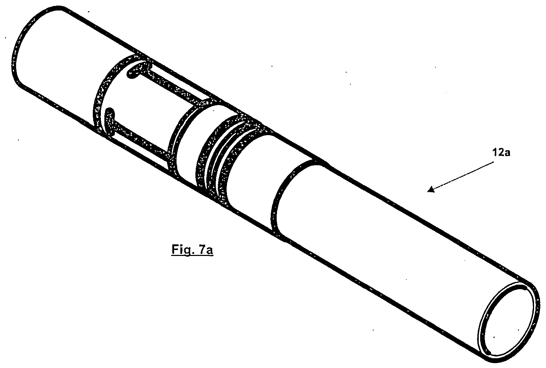

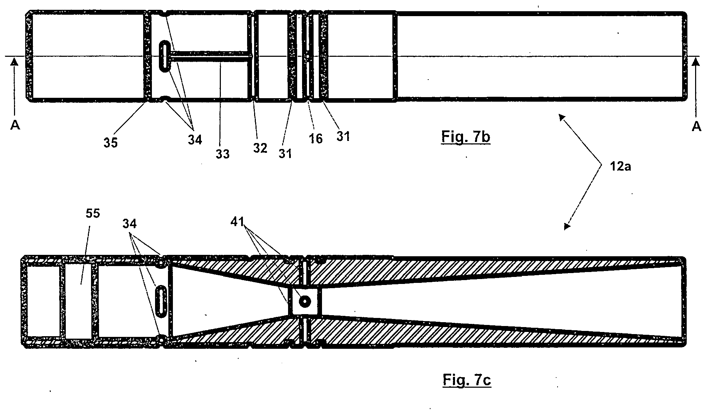

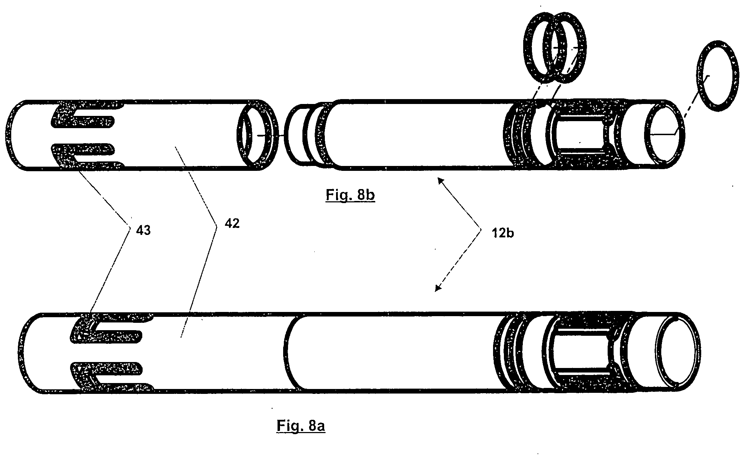

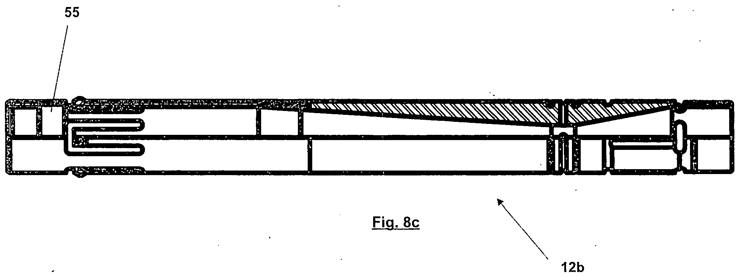

The insertable venturi (12) appears in two types: one for injection (12a), shown in Figures 7a to 7c and the other for production (12b), shown in Figures 8a to 8c. The first one is for being used in operations of injecting fluids into wells and the second one is for being used in oil extraction operations.

Each of the two types has the same basic construction. Two portions of the venturi (12) have different cross-sectional areas, both portions having an opening (34, 41) configured to communicate the interior of the venturi (12) to the exterior of the venturi (12). Preferably, the opening (34) is a slit. The openings allow the pressure at the two portions to be measured. One longitudinal end of the venturi (12) is chamfered. This end is chamfered in order to allow the venturi (12) to connect to a venturi insertion tool (17).

When the venturi (12) is inserted into the mandrel (30), the first transducer (18) and the second transducer (7) are preferably both arranged to interact with a fluid flowing inside the venturi (12) so as to measure the flow rate and at least one other physical parameter of fluid flowing inside the venturi (12).

In other words, in addition to the first transducer (18) being in communication with the interior of the venturi (12), the second transducer (7) is also in communication with the interior of the venturi (12). This communication is preferably achieved through at least one hole in the mandrel (30) and a corresponding hole (and associated slit) in the venturi (12). To this end, the exterior surface of the venturi (12) may have therein two openings (32, 34) both of which are in communication with the opening (34) of one of the two portions. This allows the same section of the interior of the venturi (12) to be in simultaneous communication with both transducers. Each transducer may be in communication with one hole in the exterior of the venturi (12). These two holes are in turn both in communication with the single hole in the interior surface of the venturi (12).

Externally, the venturi (12) preferably has a substantially cylindrical section and internally, it preferably has a constricted section, to produce the venturi effect.

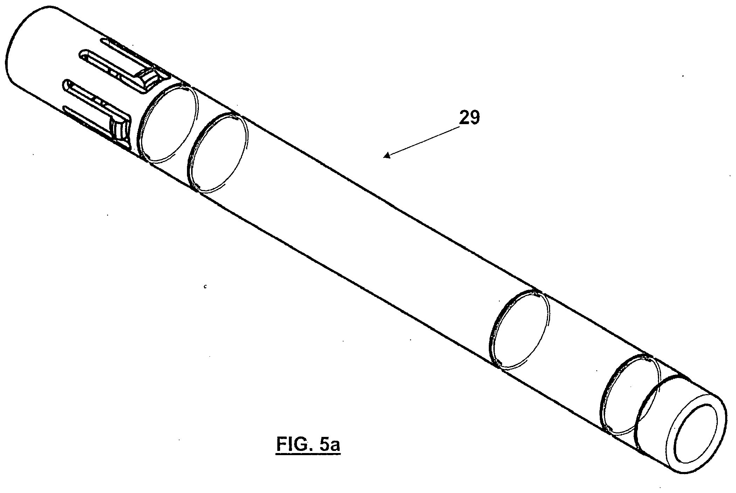

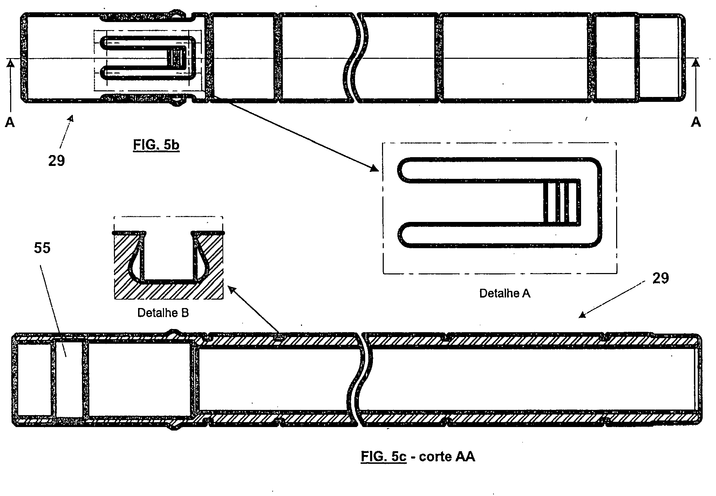

In addition to these two types, another type of venturi has been developed. This is known as a pack off (29) and is shown in Figures 5a to 5c. This pack off is a type of blind venturi, the purpose of which is to protect the optical sensors so that they are not damaged when the oil well production tubing is pressurised in order to run in a packer.

Once the venturi (12) is inserted into the mandrel (30), the differential pressure transducer is in communication with at least two sections of the interior of the venturi (12), the two sections having different cross-sectional areas and hence different flow velocities. This enables the transducer to make a flow rate measurement of flow through the venturi (12). Preferably, the cross-sectional form of the venturi (12) throughout its length is circular. In this case, the two sections have different diameters.

The injection insertable venturi (12a) preferably has several slits along its outside diameter. In particular, preferably a first slit (16) communicates with four holes, which are preferably in the section of the venturi that has the smallest diameter. Preferably, after the fitting of the insertable venturi (12a) to the hybrid mandrel (30), the first slit (16) is aligned with one of the two holes (19).

Close to this first slit there may be two other slits (31), one each side, which are fitted with O-rings to produce a perfect seal against the internal wall of the hybrid mandrel (30), so as to isolate interference associated with the reading taken by the differential pressure transducer (18).

Further to the end to be inserted closest to the upper body (1) of the mandrel (30) (i.e. the upper end), there may be a fourth slit (32) which, after the fitting of the insertable venturi (12a) in the hybrid mandrel (30), is preferably aligned with the second of the two holes (19). From this slit, a plurality of slits, which may be four longitudinal slits (33) lead off and run to a corresponding plurality of further transverse slits (34), which communicate with the inside of the insertable venturi (12a).

The further transverse slits (34) are preferably in the section of the venturi that has the greatest diameter. After the fitting of the insertable venturi (12a) in the hybrid mandrel (30), one of these transverse slits (34) is preferably aligned with the hole (20), making it possible for the pressure and temperature double transducer (7) to measure temperature and pressure in the inside of the well tubing.

In the case of the double transducer (7), the alignment of one of the transverse slits (34) with the hole (20) near the insertable venturi (12) only exists so that the pressure point is not obstructed, i.e. so that there is communication between the double transducer (7) and the well tubing.

Furthermore, the pressure prevailing at this spot is transmitted through the transverse slit (34) of the longitudinal slit (33) and from the fourth slit (32) to the second of the two holes (19), making it possible for the differential pressure transducer (18) to measure the differential pressure between two sections, for example the largest and smallest sections, of the venturi.

Between the upper end of the venturi (12) and the transverse slits (34), there may be a fifth slit (35) which is also fitted with an O-ring. This O-ring and the O-ring to the left of the first slit (16) produce a second sealed area for preventing interference with the readings of the two transducers (7 and 18).

The production insertable venturi (12b) has substantially the same configuration as the injection insertable venturi (12a) but with its profile rotated through 180° and preferably having larger dimensions. Accordingly, the same configurational combinations of slits as described above with respect to the injection venturi (12a) are equally applicable to the production venturi (12b).

Preferably, the venturi (12) is fixed relative to the elongate body (2) so as to prevent movement of the venturi (12) within the elongate body (2). For this purpose, the venturi may further comprise a holder (42) connected to an end of the venturi (12). The holder comprises locking means (43) configured to lock the venturi (12) to the interior of the elongate body (2).

As it needs to withstand the high upward pressure exerted by oil being extracted if it is used in an oil well, the insertable venturi (12b) is preferably fitted with a holder (42) with locks (43), the purpose of which is to hold it in the hybrid mandrel (30), preventing the oil being extracted from displacing the venturi (12). The holder (42) is preferably fitted on to the insertable venturi (12b) as shown in Figures 8a and 8b. In particular the upper end of the venturi (12b) fits inside the lower end of the holder (42). The larger size of the production insertable venturi (12b) is due to the addition of this holder (42).

It is to be emphasised that in use the injection insertable venturi (12a) receives downward pressure from the fluid being injected into the well and, for this reason, does not need to have locks. This is because a subtle difference in diameter at the end of the injection venturi body fixes the venturi (12) in the mandrel (30), thereby preventing the injection insertable venturi (12a) from being displaced by the fluid.

The communication between both the interior of the elongate body (2) (and inserted venturi (12a)) and the exterior of the mandrel (30) with the transducer (7) of the double pressure and temperature type, makes it possible to measure pressure and temperature both in the annulus and in the production tubing in an oil well.

The reading by this transducer (7) is preferably carried out with the use of optical reading equipment, also known as a data acquisition system, for example as described in Brazilian patent document PI 0403268-3.

The reading of the physical parameter such as pressure and preferably also temperature in the annulus and in the tubing is preferably carried out by the optical data acquisition system, as described in Brazilian patent PI 0403268-3. This involves reading the change in wavelength of the Bragg grating of the optical sensors. Then, through a calibration equation, this change in wavelength is converted to the physical quantity, in this case pressure and temperature.

In particular, there may be two Bragg gratings, at least one of which is attached to a membrane that changes form in response to pressure changes. In one embodiment, one Bragg grating is attached to the membrane and has a wavelength that is dependent on both pressure and temperature. The other grating is not attached to the membrane and has a wavelength that accordingly is dependent on only temperature. Alternatively, both gratings may be attached to the membrane and be dependent on both pressure and temperature. In this case, the dependency on temperature is the same for both gratings.

The hybrid mandrel (30) of this invention works with insertable venturis (12a and 12b), which have different beta values. The beta value indicates the ratio between the largest and smallest diameter of the venturi. In this way, the mandrel (30) may be adapted to the flow rate of the well where it is installed. The insertable venturis (12), which are used in hybrid mandrels, can have various different beta values that are suitable for measuring various different flow rates. For example, the insertable venturis (12) may have beta values of 0.21, 0.4, 0.5 and 0.6 (each adapted use in both production and injection apparatuses).

The principle of operation of flow rate measurement is as follows: the passing of the flow through the venturi (12) generates, by means of the differences in velocities at the internal pressure points, a pressure differential between sections of the venturi (12) that have different cross-sectional areas. The largest pressure differential is between the sections of the venturi (12) that have the largest and smallest diameters. This pressure difference is measured. The optical pressure differential transducer converts the pressure difference to a change in wavelength of light transmitted along an optical fibre. This is done by the variation of wavelength characteristics of Fibre Bragg Gratings as their geometry is altered due to pressure changes.

Preferably, a procedure similar to that for the measurement of pressure and temperature takes place with flow rate: the optical reading system reads the change in wavelength at two points, and this difference in wavelength is converted, through a calibration equation, to difference in pressure. With Bernoulli's equation, already known in physics, the difference in pressure is converted to flow rate.

The transducer (18) for measuring differential pressure is preferably similar to the one described in Brazilian patent document PI 0403786-3. A transducer body houses a flexible membrane. Fluid from two sections of the venturi act on opposing sides of the membrane. The membrane deflection is related to the pressure difference. The wavelength characteristics of Bragg gratings attached to the membrane vary depending on the pressure.

The reading system, which is preferably at the surface, measures this change and in accordance with the calibration constants of the sensor converts the change in optical wavelength to a pressure differential measurement.

On the basis of the pressure differential measurement, a calculation is made of the flow rate as such by means of the venturi equations. The flow rate measurement can be via the ascending flow or descending flow, i.e. depending on the direction of flow, the sensor can measure in both directions. The insertable venturis (12) of the hybrid mandrel (30) are made for several types of betas values (i.e. the mathematical ratio between the smallest and largest inner diameters of the venturi (12)).

The mandrel (30) of the present invention may be used to make measurements in oil wells of the production type or of the injection type.

The present disclosure also provides a handling tool (17) for an oil well and which is not part of the invention. The tool was developed for inserting and extracting a measuring device, such as a venturi (12), into and from a mandrel (30) disposed in an oil well. The handling tool (17) is configured to place and remove a measuring device into and from a mandrel (30) disposed within an oil well. The handling tool (17) comprises grappling means (44) alterable between an expanded state for engaging with the measuring device and a contracted state for disengaging from the measuring device. The grappling means (44) may take the form of claws.

For ease of explanation, the disclosure will be described with reference to an insertable venturi (12). However, other types of measuring device may also be used in conjunction with the present disclosure.

The insertable venturi (12) is attached to the grappling means (44) of the handling tool (17), the grappling means (44) being in the expanded state for engaging with the venturi (12). The handling tool (17) having attached thereto the venturi (12) is lowered so as to insert the venturi (12) into the mandrel (30) disposed in the oil well. The venturi (12) is then separated from the handling tool (17) by altering the grappling means (44) from being in the expanded state to being in the contracted state for disengaging from the measuring device.

Optionally, the handling tool (17) further comprises a core member (45) configured to connect to an oil well wireline. The grappling means (44) is movable with respect to the core member (45) from a hold position in which the grappling means (44) is in the expanded state to a release position in which the grappling means (44) is in the contracted state.

In this case, the separating step involves moving the grappling means (44) with respect to a core member (45) of the handling tool (17) from a hold position in which the grappling means (44) is in the expanded state to a release position in which the grappling means (44) is in the contracted state.

Optionally, the grappling means (44) is configured to engage with an exterior surface of the core member (45) so as to fix the grappling means (44) in the hold position.

In this case, the attaching step involves engaging the grappling means (44) with an exterior surface of the core member (45) so as to fix the grappling means (44) in the hold position.

Optionally, the handling tool (17) further comprises a release mechanism configured to disengage the grappling means (44) from the exterior surface of the core member (45).

In this case, the separating step involving the step of disengaging the grappling means (44) from the exterior surface of the core member (45) such that the grappling means (44) may move from the hold position to the release position.

Optionally, the release mechanism comprises a sleeve member (54) configured to move with respect to the core member (45) from a lock position at which the grappling means (44) is fixedly engaged with the exterior surface of the core member (45) to an unlock position in which the grappling means (44) may disengage from the exterior surface of the core member (45).

In this case, the disengaging step involves moving the sleeve member (54) of the handling tool (17) with respect to the core member (45) from the lock position at which the grappling means (44) is fixedly engaged with the exterior surface of the core member (45) to the unlock position at which the grappling means (44) may disengage from the exterior surface of the core member (45).

Optionally, the release mechanism further comprises a fixing member configured to fix the sleeve member (54) relative to the core member (45) at the lock position, wherein the fixing member is breakable or removable. The sleeve member (54) surrounds at least a part of the core member (45) in the longitudinal direction.

In this case, the disengaging step further involving the step of breaking or removing the fixing member of the handling tool (17) configured to fix the sleeve member (54) relative to the core member (45) at the lock position.

The grappling means (44) is positioned between the core member (45) and the sleeve member (54). The fixing member may take the form of a shear pin (47). Preferably, the fixing member extends through the sleeve member (54) and the core member (45). Preferably, the handling tool (17) further comprises a first resilient member (51) configured to move the sleeve member (54) from the lock position to the unlock position.

Optionally, the grappling means (44) comprises a plurality of grapple members and the handling tool (17) optionally further comprises a grapple member retainer (53) configured to hold the plurality of grapple members in position relative to each other.

In this case, the method of inserting the venturi (12) further comprises the step of holding a plurality of grapple members of the grappling means (44) in position relative to each other.

Preferably, the grapple members are evenly positioned around the core (45) by the retainer (53) that surrounds the core (45).

In an embodiment, there are four grapple members. The four grapple members fit around the core member (45), with each grapple member extending around approximately 70 degrees of the exterior of the core member (45). The core member (45) is preferably substantially cylindrical in form.

The grapple members may be termed claws. The claws are positioned around the core (45). The core (45) is fixed in position with respect to the sleeve member (54) by the fixing member (47). The fixing member (47) prevents longitudinal movement of the core member (45) within the sleeve member (54), which may be termed the housing. The claws (44) are for connecting to the venturi (12).

Preferably, the tool further comprises a resilient member (46) positioned between the core (45) and the sleeve member (50, 54) configured to apply force to each grapple member (44) in the longitudinal direction such that each grapple member is pushed against a flange on the transverse exterior of a longitudinal end of the core member (45). In this way, the grappling means transfer the pushing force of the resilient member (46) to the core member (45) by way of the distal flange on the core member (45). Hence, the force produced by the resilient member acts to push the core member (45) out away from the sleeve member (54).

Preferably, the resilient member (46) is a spring. The resilient member (46) is in connection with the grappling means and surrounds the core member (45). The resilient member applies force acting to urge the grappling means towards the end of the core member (45) that is inserted in the venturi (12). When the fixing member is in place, the fixing member prevents the resilient member (46) from separating the core member (45) from the sleeve member (54). In use, the fixing member is broken by application of force to one end of the tool. The core member (45) transfers force applied to one end of the tool to the fixing member (47).

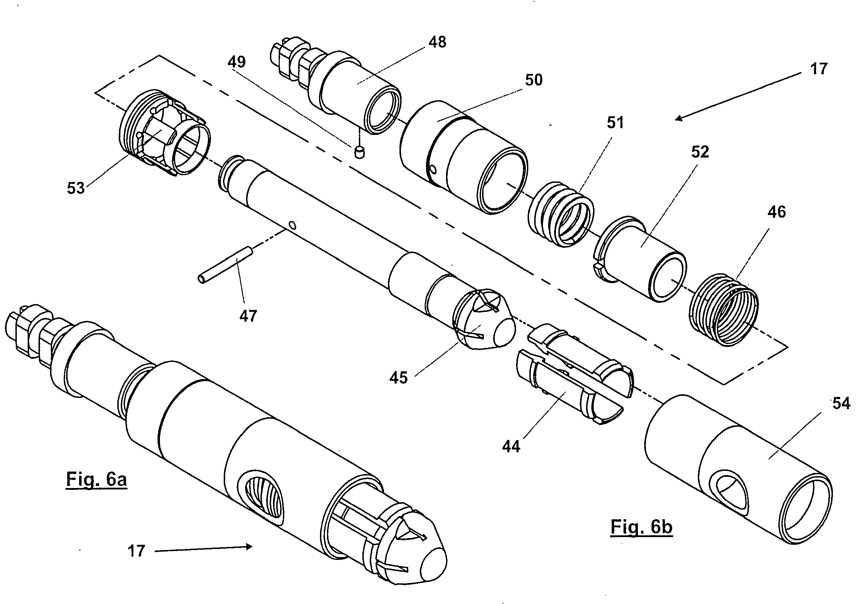

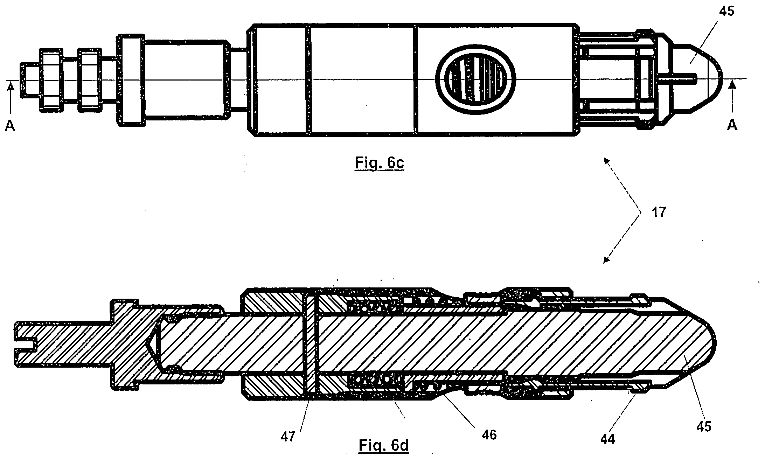

The tool (7) is shown in Figures 6a to 6d and may be used in conjunction with known wire line operations. In this case, the tool (17) is lowered in the oil well for inserting and/or removing any type of insertable venturi (12), including the blind pack off venturi (29), in the lowered position. The grappling means (44) are designed to lock in to the upper end of the venturi (12), and preferably into the neck (55), shown in detail in Figure 7c of the insertable venturi (12).

The tool (17) is used simply by inserting the grappling means (44) and the core (45) of the tool (17) into the internal fishing neck (55) of the insertable venturi (12). The grappling means (44) remain surrounding the core (45), but are pushed to a withdrawn position, compressing the resilient member (46). Specifically, the grappling means are pushed back away from the distal flange at the end of the core member (45) that is inserted into the venturi (12). This happens when the grappling means contact the chamfered upper part of the insertable venturi (12).

The grappling means (44), on reaching a section in the neck of the venturi (12) with a diameter greater than surrounding sections, fasten inside this section of the internal fishing neck (55) of the insertable venturi (12), ready for application (placing of the insertable venturi (12)).

When the venturi (12) is attached to the handling tool (17), a protrusion on the inner surface of the grappling means (44) is fixed between an external flange of the core (45) and a spring retainer (52). The spring retainer (52) keeps the cylinder spring (51) compressed beside the fixing member (47).

When the insertable venturi (12) is duly lowered inside the oil well and is positioned in its fastening place, downward blows are given to the tool (17). This breaks the fixing member (47). When the fixing member (47) breaks, the sleeve member (54) separates from the core (45) due to expansion of the cylinder spring (51). The grappling means then move away from the flange and the grappling means are pushed towards the tip of the core member (45) by the resilient member (46), which may take the form of a claw spring. As a result of moving towards the tip of the core member (45) and hence away from the external flange, the flange no longer supports the expanded state of the grappling means. This makes the grappling means contract and release the venturi (12). The tool may then be removed.

In order for the insertable venturi (12) to be removed, a new fixing member (47) must be fitted and the tool (17) must be moved (e.g. lowered) into position. When the tool (17) encounters the restriction of the insertable venturi (12), successive knocks or blows downwards are given until the insertable venturi (12) fastens to the tool (17). When the tool (17) fits into the insertable venturi (12), the latter is pulled upwards and withdrawn. Due to these features, the tool (17) can be used in external fishing operations.

The downward blows may be applied using ajar tool as is well known in the art. The jar tool moves like a hammer drill. After the release of tension in the wireline, the jar hits the handling tool. The inertia of the jar is sufficient to break the fixing member (47).

The tool (17) may also comprise a fishing neck (48). The fishing neck (48) is designed so that, if the tool (17) comes off the wire line, it is possible to recover it by means of external fishing.

The tool may compromise a fastening screw (49). The fastening screw (49) serves to prevent the unscrewing of the fishing neck (48) from the core (45), i.e. so that the fishing neck (48) does not become unfastened from the core (45).

The tool may comprise an upper sleeve (50). The upper sleeve (50) is the upper part that moves from the tool (17).

The tool may comprise a resilient member (51) positioned between the core (45) and the sleeve member (50, 54) configured to apply force in the longitudinal direction between the core member (45) and the sleeve member (54). The resilient member (51) is preferably a cylinder spring (51) that is used to move all the movable part of the tool (17).

The tool may comprise spring retainer (52) that is a part of the tool (17), which keeps the spring compressed beside the fixing member (47).

The tool may comprise a claw retainer (53) acting as the retainer mentioned above that is used to keep the grappling means (44) correctly positioned and equidistant.

The tool may comprise a sleeve member (54), which may take the form of a cylinder, that is the external part of the tool (17), which moves all the movable parts of the tool (17).

### Example of application

The equipment for measurement of double temperature and pressure and flow rate in oil wells was subjected to the qualification tests carried out in a thermal-hyperbaric chamber, which reproduces the conditions of an oil well under thermal and internal and external hydrostatic pressure loads. The term internal pressure is used with reference to a pressure applied inside the hybrid mandrel (30), which is positioned in the tubing. The term external pressure refers to a pressure applied inside the thermal-hyperbaric chamber but external to the hybrid mandrel (30) i.e. the pressure in the annulus of an oil well.

In the hydrostatic test, the internal pressure was applied in the value of 51.71MPa (7,500 psi) for 10 minutes at room temperature (i.e. about 25 degrees Celsius), recording the temperature and pressure measurements of the reference transducers of the chamber. Afterwards, the pressure was set to zero and the temperature raised to 90°C. Then, 51.71MPa (7,500 psi) was applied for 10 minutes and the pressure was rapidly set to zero. As the hybrid mandrel (30) did not have any leaks or loss of pressure, it was considered approved. The external pressure was applied in the value of 51.71MPa (7,500 psi) for 10 minutes at room temperature, recording the temperature and pressure measurements of the reference transducers of the chamber. Afterwards, the pressure was set to zero and the temperature raised to 90°C. Then, 51.71MPa (7,500 psi) was applied for 10 minutes and the pressure was rapidly set to zero. As the hybrid mandrel (30) did not have any leaks or loss of pressure, it was considered approved.

Although the present invention has just been described with reference to the examples and drawings attached as preferred embodiments of the invention, it shall be understood that various modifications can be introduced without leaving the scope of its protection as defined in the claims. In particular, it is possible for some elements to be replaced with others with the same technical function, especially the materials used, their dimensions, shapes and proportions.

## Claims

1. A mandrel (30) for an oil well, comprising:
an elongate body (2);
a first transducer (18) for measuring a flow rate of a fluid flowing through the elongate body (2);
a second transducer (7) for measuring at least one physical parameter of the or of a fluid;
a cover (4, 5) connected to a surface of the elongate body (2) to which the first transducer (18) and the second transducer (7) are attached such that the cover (4, 5) and the surface of the elongate body (2) enclose the first transducer (18) and the second transducer (7) between them,
wherein the second transducer (7) is arranged to interact with both the fluid flowing through the elongate body (2) so as to measure said at least one physical parameter of said fluid flowing through the elongate body (2) and a fluid flowing outside the elongate body (2) so as to measure said at least one physical parameter of said fluid flowing outside the elongate body (2),
**characterised in that** the cover (4, 5) comprises a hole (36) for communicating the second transducer (7) to the fluid flowing outside the elongate body (2).

2. The mandrel (30) of claim 1, further comprising an optical fibre that connects the first transducer (7) to the second transducer (18).

3. The mandrel (30) of any one of the preceding claims, wherein the first transducer (18) and the second transducer (7) each comprise at least one Bragg grating

4. The mandrel (30) of claim 3, wherein the at least one Bragg grating of the first transducer (18) and the at least one Bragg grating of the second transducer (7) have different Bragg wavelengths.

5. The mandrel (30) of any one of claims 2 to 4, wherein a single optical fibre connects the first transducer (7) to the second transducer (18).

6. The mandrel (30) of any one of the preceding claims, further comprising a venturi (12) detachably inserted within the elongate body (2).

7. The mandrel (30) of any one of the preceding claims, wherein said at least one physical parameter is a pressure and/or a temperature.

8. The mandrel (30) of any one of the preceding claims, comprising an upper body (1), the elongate body (2) and a lower body (3), wherein the upper body (1) and the lower body (3) are each fastened to an end of the elongate body (2), forming a single part.

9. The mandrel (30) of claim 8, wherein the upper structure of the upper body (1), elongate body (2) and lower body (3) is flat and the following are fastened to it: a first side cover (4), a central cover (5) and a second side cover (4), the first side cover, central cover and second side cover being comprised in said cover (4,5).

10. A method of measuring parameters using a mandrel (30) disposed in an oil well, the method comprising:
the step of simultaneously measuring a flow rate of a fluid flowing through the mandrel (30) and at least one physical parameter of the or of a fluid, and
the step of interacting a transducer (7) comprised in the mandrel (30) with both said fluid flowing through the mandrel (30) so as to measure said at least one physical parameter of said fluid flowing through the mandrel (30) and a fluid flowing outside the mandrel (30) so as to measure said at least one physical parameter of the fluid flowing outside the mandrel (30),
wherein the mandrel (30) comprises an elongate body (2) and a cover (4,5) connected to a surface of the elongate body (2) to which the transducer (7) is attached such that the cover (4,5) and the surface of the elongate body (2) enclose the transducer (7) between them,
wherein the cover (4,5) comprises a hole (36) for communicating the transducer (7) to the fluid flowing outside the elongate body (2).

11. The method of claim 10, wherein said measuring involves transmitting light along a path from a point at which said flow rate is measured to a point at which said at least one physical parameter is measured.

12. The method of any one of claims 10 to 11 wherein said measuring involves reflecting light of a first wavelength that depends on said flow rate and reflecting light of a second wavelength that depends on said at least one physical parameter.

13. The method of claim 12, wherein said first wavelength is different from said second wavelength.

14. The method of any one of claims 11 to 13, wherein said light is transmitted along a single optical fibre.

15. The method of any one of claims 10 to 14, further comprising the step of detachably inserting a venturi (12) within the mandrel (30).

## Patentansprüche

1. Dorn (30) für eine Ölbohrung, umfassend:
einen länglichen Körper (2);
einen ersten Messwertgeber (18) zum Messen einer Durchflussrate eines Fluids, das durch den länglichen Körper (2) strömt;
einen zweiten Messwertgeber (7) zum Messen mindestens eines physikalischen Parameters des oder eines Fluids;
eine Abdeckung (4, 5), die mit einer Oberfläche des länglichen Körpers (2) verbunden ist, an der der erste Messwertgeber (18) und der zweite Messwertgeber (7) befestigt sind, sodass die Abdeckung (4, 5) und die Oberfläche des länglichen Körpers (2) den ersten Messwertgeber (18) und den zweiten Messwertgeber (7) dazwischen umschließen,
wobei der zweite Messwertgeber (7) angeordnet ist, um mit dem Fluid, das durch den länglichen Körper (2) strömt, um den mindestens einen physikalischen Parameter des Fluids zu messen, das durch den länglichen Körper (2) strömt, und einem Fluid, das außerhalb des länglichen Körpers (2) strömt, um den mindestens einen physikalischen Parameter des Fluids zu messen, das außerhalb des länglichen Körpers (2) strömt, zusammenzuwirken,
**dadurch gekennzeichnet, dass** die Abdeckung (4, 5) ein Loch (36) umfasst, um den zweiten Messwertgeber (7) mit dem Fluid zu verbinden, das außerhalb des länglichen Körpers (2) strömt.

2. Dorn (30) nach Anspruch 1, ferner umfassend eine optische Faser, die den ersten Messwertgeber (7) mit dem zweiten Messwertgeber (18) verbindet.

3. Dorn (30) nach einem der vorherigen Ansprüche, wobei der erste Messwertgeber (18) und der zweite Messwertgeber (7) jeweils mindestens ein Bragg-Gitter umfassen.

4. Dorn (30) nach Anspruch 3, wobei das mindestens eine Bragg-Gitter des ersten Messwertgebers (18) und das mindestens eine Bragg-Gitter des zweiten Messwertgebers (7) unterschiedliche Bragg-Wellenlängen aufweisen.

5. Dorn (30) nach einem der Ansprüche 2 bis 4, wobei eine einzelne optische Faser den ersten Messwertgeber (7) mit dem zweiten Messwertgeber (18) verbindet.

6. Dorn (30) nach einem der vorherigen Ansprüche, ferner umfassend einen Luftrichter (12), der lösbar in den länglichen Körper (2) eingesetzt ist.

7. Dorn (30) nach einem der vorherigen Ansprüche, wobei der mindestens eine physikalische Parameter ein Druck und/oder eine Temperatur ist.

8. Dorn (30) nach einem der vorherigen Ansprüche, umfassend einen oberen Körper (1), den länglichen Körper (2) und einen unteren Körper (3), wobei der obere Körper (1) und der untere Körper (3) jeweils an einem Ende des länglichen Körpers (2) befestigt sind und ein einzelnes Teil bilden.

9. Dorn (30) nach Anspruch 8, wobei die obere Struktur des oberen Körpers (1), des länglichen Körpers (2) und des unter Körpers (3) flach ist und Folgendes daran befestigt ist: eine erste seitliche Abdeckung (4), eine mittlere Abdeckung (5) und eine zweite seitliche Abdeckung (4), wobei die erste seitliche Abdeckung, die mittlere Abdeckung und die zweite seitliche Abdeckung in der Abdeckung (4, 5) enthalten sind.

10. Verfahren zum Messen von Parametern unter Verwendung eines in einem Ölbohrloch angeordneten Dorns (30), wobei das Verfahren Folgendes umfasst:
den Schritt eines gleichzeitigen Messens einer Durchflussrate eines Fluids, das durch den Dorn (30) strömt, und mindestens eines physikalischen Parameters des oder eines Fluids, und
den Schritt eines Zusammenwirkens eines Messwertgebers (7), der in dem Dorn (30) enthalten ist, mit dem Fluid, das durch den Dorn (30) strömt, um den mindestens einen physikalischen Parameter des Fluids zu messen, das durch den Dorn (30) strömt, und eines Fluids, das außerhalb des Dorns (30) strömt, um den mindestens einen physikalischen Parameter des Fluids zu messen, das außerhalb des Dorns (30) strömt,
wobei der Dorn (30) einen länglichen Körper (2) und eine Abdeckung (4, 5) umfasst, die mit einer Oberfläche des länglichen Körpers (2) verbunden ist, an der der Messwertgeber (7) befestigt ist, sodass die Abdeckung (4, 5) und die Oberfläche des länglichen Körpers (2) den Messwertgeber (7) dazwischen umschließen,
wobei die Abdeckung (4, 5) ein Loch (36) umfasst, um den Messwertgeber (7) mit dem Fluid zu verbinden, das außerhalb des länglichen Körpers (2) strömt.

11. Verfahren nach Anspruch 10, wobei das Messen ein Übertragen von Licht entlang eines Pfads von einem Punkt, an dem die Durchflussrate gemessen wird, zu einem Punkt, an dem der mindestens eine physikalische Parameter gemessen wird, involviert.

12. Verfahren nach einem der Ansprüche 10 bis 11, wobei ein Messen ein Reflektieren von Licht einer ersten Wellenlänge, die von der Durchflussrate abhängt, und ein Reflektieren von Licht einer zweiten Wellenlänge, die von dem mindestens einen physikalischen Parameter abhängt, involviert.

13. Verfahren nach Anspruch 12, wobei sich die erste Wellenlänge von der zweiten Wellenlänge unterscheidet.

14. Verfahren nach einem der Ansprüche 11 bis 13, wobei das Licht entlang einer einzelnen optischen Faser übertragen wird.

15. Verfahren nach einem der Ansprüche 10 bis 14, ferner umfassend den Schritt eines lösbaren Einsetzens eines Luftrichters (12) in den Dorn (30).

## Revendications

1. Mandrin (30) pour puits de pétrole, comprenant :
un corps allongé (2) ;
un premier transducteur (18) destiné à mesurer un débit d'un fluide s'écoulant à travers le corps allongé (2) ;
un deuxième transducteur (7) destiné à mesurer au moins un paramètre physique du ou d'un fluide ;
un capot (4, 5) raccordé à une surface du corps allongé (2) auquel le premier transducteur (18) et le deuxième transducteur (7) sont attachés de sorte que le capot (4, 5) et la surface du corps allongé (2) renferment le premier transducteur (18) et le deuxième transducteur (7) entre eux,
le deuxième transducteur (7) étant agencé pour interagir avec à la fois le fluide s'écoulant à travers le corps allongé (2) de façon à mesurer ledit au moins un paramètre physique dudit fluide s'écoulant à travers le corps allongé (2) et un fluide s'écoulant à l'extérieur du corps allongé (2) de façon à mesurer ledit au moins un paramètre physique dudit fluide s'écoulant à l'extérieur du corps allongé (2),
**caractérisé en ce que** le capot (4, 5) comprend un trou (36) destiné à faire communiquer le deuxième transducteur (7) avec le fluide s'écoulant à l'extérieur du corps allongé (2).

2. Mandrin (30) de la revendication 1, comprenant en outre une fibre optique qui connecte le premier transducteur (7) au deuxième transducteur (18).

3. Mandrin (30) de l'une quelconque des revendications précédentes, dans lequel le premier transducteur (18) et le deuxième transducteur (7) comprennent chacun au moins un réseau de Bragg.

4. Mandrin (30) de la revendication 3, dans lequel l'au moins un réseau de Bragg du premier transducteur (18) et l'au moins un réseau de Bragg du deuxième transducteur (7) ont des longueurs d'onde de Bragg différentes.

5. Mandrin (30) de l'une quelconque des revendications 2 à 4, dans lequel une seule fibre optique connecte le premier transducteur (7) au deuxième transducteur (18).

6. Mandrin (30) de l'une quelconque des revendications précédentes, comprenant en outre un venturi (12) inséré de manière détachable dans le corps allongé (2).

7. Mandrin (30) de l'une quelconque des revendications précédentes, dans lequel ledit au moins un paramètre physique est une pression et/ou une température.

8. Mandrin (30) de l'une quelconque des revendications précédentes, comprenant un corps supérieur (1), le corps allongé (2) et un corps inférieur (3), le corps supérieur (1) et le corps inférieur (3) étant chacun fixés à une extrémité du corps allongé (2), formant une seule pièce.

9. Mandrin (30) de la revendication 8, dans lequel la structure supérieure du corps supérieur (1), du corps allongé (2) et du corps inférieur (3) est plate et les éléments suivants sont fixés à elle : un premier capot latéral (4), un capot central (5) et un deuxième capot latéral (4), le premier capot latéral, le capot central et le deuxième capot latéral étant compris dans ledit capot (4, 5).

10. Procédé de mesure de paramètres à l'aide d'un mandrin (30) disposé dans un puits de pétrole, le procédé comprenant :
l'étape consistant à mesurer simultanément un débit d'un fluide s'écoulant à travers le mandrin (30) et au moins un paramètre physique du ou d'un fluide, et
l'étape consistant à faire interagir un transducteur (7) compris dans le mandrin (30) avec à la fois ledit fluide s'écoulant à travers le mandrin (30) de façon à mesurer ledit au moins un paramètre physique dudit fluide s'écoulant à travers le mandrin (30) et un fluide s'écoulant à l'extérieur du mandrin (30) de façon à mesurer ledit au moins un paramètre physique dudit fluide s'écoulant à l'extérieur du mandrin (30),
le mandrin (30) comprenant un corps allongé (2) et un capot (4, 5) raccordé à une surface du corps allongé (2) auquel le transducteur (7) est attaché de sorte que le capot (4, 5) et la surface du corps allongé (2) renferment le transducteur (7) entre eux,
le capot (4,5) comprenant un trou (36) destiné à faire communiquer le transducteur (7) avec le fluide s'écoulant à l'extérieur du corps allongé (2).

11. Procédé de la revendication 10, dans lequel, ladite mesure implique la transmission de lumière le long d'un trajet d'un point auquel ledit débit est mesuré à un point auquel ledit au moins un paramètre physique est mesuré.

12. Procédé selon l'une quelconque des revendications 10 à 11, dans lequel ladite mesure implique la réflexion de lumière d'une première longueur d'onde qui dépend dudit débit et la réflexion de lumière d'une deuxième longueur d'onde qui dépend dudit au moins un paramètre physique.

13. Procédé de la revendication 12, dans lequel ladite première longueur d'onde est différente de ladite deuxième longueur d'onde.

14. Procédé de l'une quelconque des revendications 11 à 13, dans lequel ladite lumière est transmise le long d'une seule fibre optique.

15. Procédé selon l'une quelconque des revendications 10 à 14, comprenant en outre l'étape consistant à insérer de manière détachable un venturi (12) dans le mandrin (30).
